(19) **Europäisches Patentamt / European Patent Office / Office européen des brevets**

(11) **EP 2 489 635 A1**

(12) **EUROPEAN PATENT APPLICATION**
published in accordance with Art. 153(4) EPC

(43) Date of publication:
**22.08.2012 Bulletin 2012/34**

(21) Application number: **10818575.2**

(22) Date of filing: **27.09.2010**

(51) Int Cl.:
**C01B 33/107** (2006.01)   **B09B 3/00** (2006.01)

(86) International application number:
**PCT/JP2010/005799**

(87) International publication number:
**WO 2011/036898 (31.03.2011 Gazette 2011/13)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.09.2009 JP 2009221414**

(71) Applicant: **JX Nippon Oil & Energy Corporation Chiyoda-ku Tokyo 100-8162 (JP)**

(72) Inventors:
• **HAYASHI, Shinya**
  **Yokohama-shi**
  **Kanagawa 231-0815 (JP)**
• **ASANO, Tsuyoshi**
  **Yokohama-shi**
  **Kanagawa 231-0815 (JP)**

(74) Representative: **Algemeen Octrooi- en Merkenbureau**
**P.O. Box 645**
**5600 AP Eindhoven (NL)**

(54) **PROCESS FOR PRODUCTION OF SILICON TETRACHLORIDE**

(57)    An aspect of a process for producing silicon tetrachloride comprises chlorinating a silicon-containing substance, preferably a silicon-containing substance that contains a silicic acid biomass, in the presence of a carbon-containing substance that contains ash produced in an industrial process, preferably ash produced in a power-generating facility in which an organic material is combusted and a combustion energy produced is converted into an electric power.

FIG.1

**Description**

BACKGROUND OF THE INVENTION

Field of the Invention

The present invention relates to a method for producing silicon tetrachloride where various inorganic silicon compounds are used as a raw material.

Related Art

Silicon tetrachloride is used as a synthetic raw material in various organic silicon compounds such as fine silica, synthetic quartz, silicon nitride, etc., to which much attention has been paid recently as a raw material of silicon for solar cell.
In recent years, a reduction in emission of carbon dioxide, which is considered as a causative substance of global warming, has been a significant issue for prevention of global warming. Solar cell has attracted a considerable attention as a solution for preventing global warming, and the demand for solar cell production has been remarkably increased. A main current solar cell uses silicon in a power generation layer, and thus the supply of silicon for solar cell production falls into a tight situation with its increasing demand for silicon.
On another front, since a price of current solar cell is still expensive, a price of electricity produced by solar cell is several times as high as electricity provided by commercial electric companies, and thus reductions in raw material costs and production costs have been desired.
Method for producing silicon for solar cell includes the following three techniques. (1) Siemens method: producing polycrystalline silicon by reducing trichlorosilane with hydrogen, (2) Fluid bed method: producing polycrystalline silicon by allowing silicon particulates to flow in a reactor, and introducing thereto a mixed gas composed of monosilane and hydrogen, (3) Zinc reduction method: producing polycrystalline silicon by reducing silicon tetrachloride with molten zinc. Methods for producing silicon for solar cell, which are oriented for reducing the product price, include (1) Siemens method, (2) Fluid bed method has a fundamental problem of low production efficiency with regard to high purity metal silicon, but even so, has a superiority in production efficiency (3) Zinc reduction method is considered to be preferably used.
Methods for producing silicon tetrachloride to be used as a raw material in a zinc reduction method include the following three techniques.
(1) A method for reacting metal silicon or silicon alloy with hydrogen chloride. In this technique, metal silicon is used as a raw material. Metal silicon is produced by reducing silica stone in a electric furnace under a temperature condition of 2,000°C or higher, and thus disadvantageously a large amount of electricity is required, which leads to an increase in the raw material price. Also in this technique, silicon tetrachloride is obtained as a byproduct in trichlorosilane production process, and thus the reaction yield is reduced.
(2) A method for reacting silicon carbide with chlorine. This technique has a defect in that a large amount of electricity is required for producing silicon carbide, which leads to an increase in the raw material price.
(3) Method for reacting a mixture of a silicon-containing substance such as silica stone, etc. and carbon.

$$SiO_2 + 2C + 2Cl_2 \rightarrow SiCl_4 + 2CO \qquad (a)$$

In this technique, as shown in the above reaction formula (a), a silicon-containing substance such as silica stone, etc. is reacted with carbon and chlorine to produce silicon tetrachloride. A mixture of a silicon-containing substance such as silica stone with carbon has a lower reactivity with chlorine, and furthermore the reaction has to be made under a high temperature condition of 1,300°C or higher, but the raw material price in this technique is lower as compared with those used in the above techniques (1) and (2), and thus price reduction in silicon for solar cell can be expected by improving the reaction in the above technique (3).
On the other hand, in the reaction in the above technique (3), when a chlorination reaction is conducted using an ash of a silicic acid biomass such as a rice hull ash as a silicon-containing substance, and an activated carbon or coke as a carbon-containing substance, the reactivity of the reaction is increased significantly, and thus silicon tetrachloride can be produced even under a lower temperature condition of 400°C to 1,100°C which is lower temperature than that in the related art.
However, use of coke or activated carbon whose particle diameter is large as a carbon-containing substance, leads to a poor dispersion state of silica and carbon, and thus the yield of silicon tetrachloride is hardly increased.
On the other hand, in the reaction in the above technique (3), when a carbonized silicic acid biomass obtained by burning a silicic acid biomass under inert atmosphere is used as a silicon-containing substance, silicon tetrachloride can be obtained in a high yield even in a shorter time and lower temperature condition. This is because, silica and carbon contained in a carbonized silicic acid biomass are each composed of microparticles, and thereby existing in a high dispersion state, and these particles are porous and thus have a larger surface area (see Patent Document 1).

However, a carbon content of silicic acid biomass is varied depending on the biomass used so that a carbon content included in a silicic acid biomass after carbonization is sometimes insufficient to conduct reaction, and therefore an additional carbon-containing substance like coke, activated carbon, and the like should be added. Therefore, when a carbon-containing substance capable of producing a higher dispersion state of silica and carbon is used, silicon tetrachloride can be obtained in a high yield even in a shorter time and lower temperature condition compared to the related art.

A silicic acid biomass has a smaller specific gravity, and costs for collecting and transporting a large amount of a silicic acid biomass are significantly increased in industrialization, and thus it is desirable to transport a silicic acid biomass in the form of increased specific gravity after incineration or carbonization. Particularly, since incineration of silicic acid biomass is a relatively simple process of burning, it is further preferable to transport a silicic acid biomass in the form of after incineration from the view point of the cost.

In consideration of industrialization, it is essential that a silicic acid biomass is provided stably in a large amount, and thus, a hull material of rice or wheat or a residue produced by biomass saccharification while on producing bioethanol is suitable. Although a hull material of rice or wheat can be provided stably in a large amount, there is a difficulty in constructing a system where a rice hull material can be collected efficiently.

In recent years bioethanol has attracted much attention as an eco-friendly energy source, and the amount of bioetanol produced has been increasing year by year. Bioethanol is produced in a process where a biomass is saccharified and then ethanol-fermented with yeast, followed by concentration and distillation. A residue generated in a large amount by biomass saccharification in the above bioethanol production process is collected and recycled as a fuel of boiler, which provides an energy source of heat and electricity needed in a bioethanol production process. Therefore, an ash of a residue produced by biomass saccharification is provided stably in a large amount in association with bioethanol production. Additionally, an ash of a residue produced by biomass saccharification is obtained in a collective form, and thus construction of a collection system, which is a problematic issue associated with processing of rice hull material, is not required, and thus, it is expected that the ash of a residue produced by biomass saccharification may become a useful raw material in silicon tetrachloride production.

Based on the above facts, also in the case where a silicic acid biomass processed through incineration is used as a silicon-containing substance, it is desired that silicon tetrachloride is obtained in a higher yield even in a condition of lower temperature and shorter time period than ever.

In the reaction in the above technique (3), it is suggested that a potassium-containing compound and a sulfur-containing compound act as a catalyst (see Patent Document 2 and 3).

However, in the conventional techniques, a reaction catalyst such as a potassium compound or a sulfur compound is dispersed in a raw material by mixing the compound with a silicon-containing substance and a carbon-containing substance, or otherwise, by feeding the catalyst into the reaction system directly. With these approaches, the reaction catalyst can hardly be highly dispersed in the raw material, so it is difficult to define that such a catalyst exhibit a catalytic ability sufficiently. Therefore, if a dispersion state of a raw material and a catalyst can be brought into a higher dispersion state, further increase in the reactivity can be expected.

On the other hand, an ash produced in an industrial process contains carbon as a primary component, and generally has characteristics of smaller particle diameter and larger surface area. With these characteristics, it is expected that silica and carbon can be brought into a higher dispersion state when a silicon-containing substance is mixed thereto, and silicon tetrachloride can be produced in a high yield even in a shorter time and lower temperature condition.

In some cases, an ash produced in an industrial process includes a catalytic component of chlorination reaction is mixed with carbon at a molecular level in the ash, and thereby a further improvement in the reactivity can be expected.

Furthermore, because an ash produced in an industrial process can be provided stably in a large amount, and besides, most of the ash is discarded as an industrial waste without being collected and recycled, it is also expected that the ash can be supplied continuously and cost-effectively.

Patent Document

Patent Document 1: Japanese Patent Application Publication No.S58-055330
Patent Document 2: Japanese Examined Patent Application Publication No.H03-055407
Patent Document 3: Japanese Examined Patent Application Publication No.H04-072765

SUMMARY OF THE INVENTION

Problems to be Solved by the Invention

Based on the current situation described above, it is desired that silicon for solar cell is provided more stably and cost-effectively, particularly, silicon tetrachloride, which is a raw material for producing silicon for solar cell, is desired to be provided more stably and cost-effectively.

The objective of the present invention is to use a raw material, the supply of which can be continued stably and cost-effectively, to produce silicon tetrachloride in a high yield even in a shorter time and lower temperature condition, and thereby providing silicon for solar cell stably and cost-effectively.

Means for Solving Problems

One aspect of the invention is a production method of silicon tetrachloride. This production method is characterized in that a silicon-containing substance is chlorinated in the presence of carbon-containing substance which contains an ash produced in an industrial process.

According to the production method of this aspect, because of characteristics of an ash produced in an industrial process, silicon tetrachloride can be produced in a good yield in a shorter time even in a lower temperature condition, thereby reducing the production cost. By using an ash produced in an industrial process, a raw material cost of silicon tetrachloride can also be reduced to thereby provide silicon for solar cell stably and cost-effectively.

Effect of the Invention

According to the present invention, silicon tetrachloride, which is a raw material for producing silicon for solar cell, can be produced stably and cost-effectively.

BRIEF DESCRIPTION OF THE DRAWINGS

FIG. 1 is a graph showing a variation of conversion rate of reaction to silicon tetrachloride over time at each reaction temperature according to a method for producing silicon tetrachloride of Example 1.
FIG. 2 is a graph showing a variation of conversion rate of reaction to silicon tetrachloride over time at each reaction temperature according to a method for producing silicon tetrachloride of Example 2.
FIG. 3 is a graph showing a variation of conversion rate of reaction to silicon tetrachloride over time at each reaction temperature according to a method for producing silicon tetrachloride of Example 3.
FIG. 4 is a graph showing a variation of conversion rate of reaction to silicon tetrachloride over time at each reaction temperature according to a method for producing silicon tetrachloride of Comparative example 1.
FIG. 5 is a graph showing a variation of conversion rate of reaction to silicon tetrachloride over time at each reaction temperature according to a method for producing silicon tetrachloride of Comparative example 2.

DETAILED DESCRIPTION OF THE INVENTION

Best Mode for Carrying Out the Invention

A preferred embodiment of the invention will be described below, but the present invention is not limited thereto.

A method for producing silicon tetrachloride according to an embodiment of the invention comprises a step of chlorinating a silicon-containing substance in the presence of carbon-containing substance which contains an ash produced in an industrial process.

(Carbon-containing substance)

A carbon-containing substance, which is used in the present embodiment, contains an ash produced in an industrial process. An ash produced in an industrial process refers to an ash containing carbon produced by combustion or incineration in plant. A specific example of the ash is an ash produced in a waste combustion plant or in a power plant, but not limited to these. An ash produced in an industrial process contains carbon generally has characteristics of smaller particle diameter and larger surface area. Therefore, when a silicon-containing substance is mixed thereto, silica and a carbon-containing substance are brought into a higher dispersion state, and thus, silicon tetrachloride can be produced in a high yield even in a shorter time and lower temperature condition.

The amount of carbon contained in an ash produced in an industrial process is 30%-95% by mass, preferably 60%-95% by mass, more preferably 70%-90% by mass, but not limited to these. A mean particle diameter of carbon contained in an ash produced in an industrial process is 0.1 to 1000 $\mu$m, preferably 1-100 $\mu$m, more preferably 5-30 $\mu$m, but not limited to these. A surface area (BET) of an ash produced in an industrial process is 0.01-100 $m^2$/g, preferably 0.1-50 $m^2$/g, more preferably 1-30 $m^2$/g, but not limited to these.

When a substance having a larger particle diameter such as coke or charcoal is used as a carbon-containing substance, a pulverization process is required to reduce the particle diameter, while, in the case of an ash produced in an industrial process, a pulverization process is not required, and thus the production process can be reduced.

Furthermore, an ash produced in an industrial process can be provided stably in a large amount, and besides, most of the ash is discarded as an industrial waste without being collected and recycled. Based on the facts described above, when an ash produced in an industrial process is used as a carbon-containing substance, not only production costs but also raw material costs of the ash, which were conventionally required, can be reduced. Industrial wastes can also be reduced, and thus the load to the environment can be reduced.

The carbon-containing substance may contain at least an ash produced in an industrial process, or otherwise, may contain other carbon-containing compound. Other carbon-containing compounds may not only be a solid such as coke, activated carbon or carbon black, but also a gas such as carbon monoxide, carbon dioxide or methane, and further, carbon monoxide, which is generated in producing silicon tetrachloride, may be recycled, but not limited to these. An amount of a carbon-containing substance to be added is selected such that the molar number of carbon would be 1.5-20 times, preferably 2-10 times, more preferably, 3-5 times lager than that of silicon contained in a silicon-containing substance, but not limited to these.

In one embodiment of the invention, an ash produced in an industrial process is preferably an ash produced in a power-generation facility where a combustion energy is converted into an electric power by burning an organic substance (hereinafter, referred to as an ash produced in a power-generation facility). An ash produced in a power-generation facility refers to an ash produced primarily in a thermal power plant or in an integrated gasification combined cycle (hereinafter, abbreviated as IGCC), but not limited to this. IGCC is an electric power production system where electricity is generated in an integrated power generation facility, by using, as a raw material, a synthetic gas including carbon monoxide or hydrogen as a primary component, which is produced in a fossil fuel such as heavy oil, petroleum residue oil, petroleum coke, olimulsion, or coal, and from where a large amount of ashes are discarded.

Characteristics of an ash produced in a power-generation facility include, of course, a smaller particle diameter and a larger surface area, and besides, a sulfur content arising from a use of fossil fuel as a raw material. As described above, sulfur acts as a catalyst in a chlorination reaction, and thus, when an ash produced in a power-generation facility is used as a carbon-containing substance, a conversion rate of the chlorination reaction is increased.

In a conventional technique, a raw material and a sulfur compound was mixed by mixing a sulfur compound with a silicon-containing substance and a carbon-containing substance directly, or otherwise, by feeding a sulfur content directly into a reaction system, and thus, it is difficult to highly disperse silica and carbon with a sulfur compound, so this can hardly be defined that sulfur exhibits a sufficient catalytic ability. On the other hand, an ash produced in a power-generation facility includes carbon and sulfur in a high dispersion state at a molecular level, and therefore, the conversion rate of the reaction can further be increased. An ash produced in a power-generation facility contains 1%-30% by mass, preferably 2%-20% by mass, and more preferably, 5%-10% by mass of sulfur, but not limited to these.

(Silicon-containing substance)

A silicon-containing substance may include only a silicon content, and specific examples thereof include an ash or a carbide of silica stone, silica sand or silicic acid biomass, and crystalline or amorphous silica alumina, but not limited to these. The amount of silicon contained in a silicon-containing compound is 15%-46% by mass, preferably 20%-45% by mass, more preferably, 20%-35% by mass, but not limited to these.

Particularly, in one of the present embodiments, a silicon-containing substance preferably contains a silicic acid biomass. A silicic acid biomass refers to a biomass containing silicon content derived from plant, specific examples of silicic acid biomass include a plant containing silicon, a hull or straw of rice, wheat, etc., a residue produced by saccharifying a plant containing silicon content, but not limited to these. A silicic acid biomass may also be an ash content thereof produced by combustion or a biomass processed by carbonization.

Silica contained in an ash of silicic acid biomass, has characteristics of smaller particle diameter and larger surface area. Therefore, when a silicic acid biomass is mixed with a carbon-containing substance, silica and carbon can be mixed in a relatively higher dispersion state, and therefore silicon tetrachloride can be obtained even in a lower temperature condition than in the related art.

Whereas, silica and carbon in a carbonized silicic acid biomass, which is obtained by burning a silicic acid biomass in an inert atmosphere, both have characteristics of smaller particle diameter and larger surface area. Therefore, silica and carbon can be brought into a higher dispersion state, and when a carbonized silicic acid biomass is used as a silicon-containing substance, silicon tetrachloride can be obtained in a high yield even in a shorter time and lower temperature condition.

However, a carbon content of silicic acid biomass is significantly varied depending on the biomass used so that a carbon content included in a silicic acid biomass after carbonization is sometimes insufficient to conduct a reaction, and therefore an additional carbon-containing substance should be added.

In the present embodiment, by using a carbon-containing substance which contains an ash produced in an industrial process whose particle diameter is smaller than coke and activated carbon, silica and carbon is brought into a higher dispersion state even when an ash of silicic acid biomass is used as a silicon-containing substance, and thereby, silicon tetrachloride can be obtained in a high yield even in a shorter time and lower temperature condition.

In the present embodiment, also when an ash of silicic acid biomass is used as a silicon-containing substance, silicon tetrachloride can be obtained in a high yield even in a lower temperature and shorter time condition, thereby realizing a reduction in transportation cost, which is a problematic issue in industrialization. Besides, an ash of residues produced by biomass saccharification, which is expect to be provided stably and collectively in a large amount will be utilized effectively, thereby further reduction of raw material costs can also be realized in the future. Furthermore, even if a silicic acid biomass after carbonization is used as a silicon-containing substance, the reactivity in the chlorination reaction can be increased higher than when coke or an activated carbon is added as a carbon-containing substance.

On performing a production method according to the present embodiment, for mixing a silicon-containing substance with a carbon-containing substance which contains an ash produced in an industrial process, they may simply be mixed together or otherwise mixed together through carbonization. Carbonization refers to a process where a silicon-containing substance is mixed with a carbon-containing substance which contains at least an ash produced in a industrial process, and then the obtained mixture is heated in an inert gas atmosphere to carbonize the silicon-containing substance. Since an ash produced in an industrial process is composed of microparticles, by applying a carbonization process, silica and carbon can be brought into a higher dispersion state than in the case where a silicon-containing substance and a carbon-containing substance are simply mixed together, and besides, silicon tetrachloride can be obtained in a high yield even in a shorter time and lower temperature condition. An inert gas for use in the carbonization is nitrogen, argon or helium, but not limited to these. A heating temperature at carbonization is 200□C-1200°C, preferably 400°C-1000°C, more preferably 600°C-800°C, but not limited to these.

On performing a production method according to the present embodiment, a catalyst, which promotes chlorination reaction, may be added separately. Catalysts, which promote chlorination reaction, include a potassium content or a sulfur content, but not limited to these. Specifically, as a potassium content, potassium carbonate, potassium chloride, potassium hydroxide, potassium sulfate or potassium nitrate can be used, and as a sulfur content, sulfur, sulfur dioxide, hydrogen sulfide or carbon disulfide can be used, but not limited to these. An amount of the catalyst to be added may be 0.05%-30% by mass, preferably 0.05%-20% by mass, more preferably 0.1%-10% by mass relative to the silicon content in the reaction mixture, but not limited thereto. A method for mixing a silicon-containing substance with a carbon-containing substance which contains at least an ash produced in an industrial process, and, as required, with a solid or liquid catalyst may be performed either by wet process or dry process, and various other techniques can also be used. Additionally, these substances may be provided directly in a reactor without mixing with a catalyst.

As a chlorine-containing substance, chlorine or a chlorinated carbon compound such as carbon tetrachloride, tetrachloroethylene or phosgene, and a mixture of chlorine with carbon monoxide, carbon dioxide, methane, chlorohydrocarbon or an inert gas can be used, but not limited to these.

On performing a production method according to the present embodiment, a reaction of the chlorine-containing substance with the silicon-containing substance, the carbon-containing substance which contains at least an ash produced in an industrial process, or a mixture to which a catalyst is added as required may be performed by using either an immobilized bed method or a fluidized bed method, in which the reaction temperature is 400°C-1500°C, preferably 600°C-1200°C, more preferably 700°C-900°C, but not limited to these.

The present invention will be described below based on the examples.

(Example 1)

100 mg of silica stone was used as a silicic acid-containing substance, and 45 mg of ash produced in an industrial process was used as a carbon-containing substance. An ash produced in an industrial process, which was produced in a waste combustion plant, was used without pulverization. A silica stone was used after pulverized by a ball mill. A silica stone after pulverization had a surface area (BET) of 2,160 cm$^2$/g and a silica content of 95.2% by mass, and an ash produced in an industrial process used had a carbon content of 85.2% by mass, a mean particle diameter of 17 $\mu$m, and a surface area (BET) of 19 m$^2$/g.

A carbon-containing substance was added into a silicic acid-containing substance and then mixed to obtain a reaction mixture. Additionally, an amount of carbon-containing substance to be added was selected such that molar number of C contained in the reaction mixture would be twice of molar number of Si contained in a silicon-containing substance.

A reaction mixture was brought into contact with a pure chlorine gas at a temperature of 600°C-900°C to conduct a chlorination reaction. Conversion rate of the chlorination reaction to silicon tetrachloride was calculated by the following formula (b).

$$\text{Conversion rate of reaction (\%)} = X/Y \times 100 \quad (b)$$

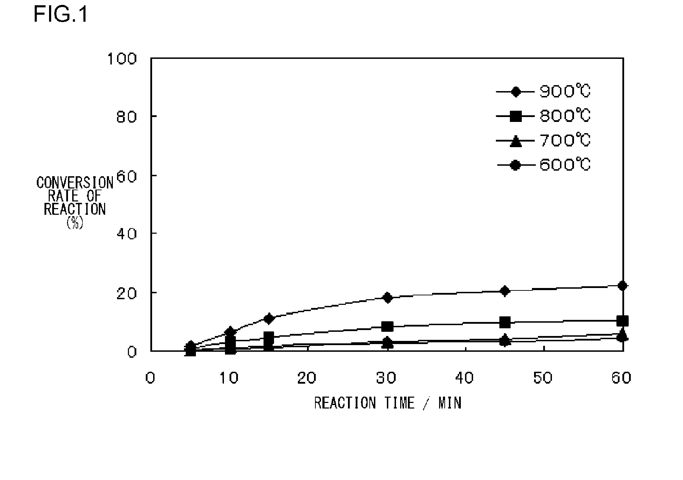

X: Molar number of a produced silicon tetrachloride
Y: Molar number of Si contained in a silicic acid-containing substance
A variation of conversion rate of reaction to silicon tetrachloride over time at each reaction temperature is shown in FIG. 1.

(Example 2)

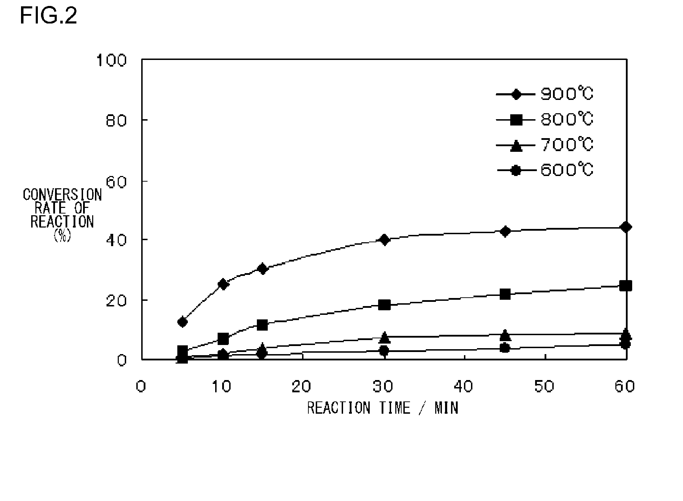

100 mg of silica stone was used as a silicic acid-containing substance, and 49 mg of ash produced in an industrial process was used as a carbon-containing substance. In this example, an ash produced in a power-generation facility, which was produced in an IGCC, was used without pulverization. The silica stone after pulverization has an surface area (BET) of 2,160 $cm^2$/g, a silica content of 95.2% by mass, and an ash produced in an IGCC used had a carbon content of 79.0% by mass, a sulfur content of 5.9% by mass, a mean particle diameter of 8 $\mu$m, and a surface area (BET) of 23 $m^2$/g. A reaction mixture was prepared using a procedure similar to Example 1, and then brought into contact with a pure chlorine gas at a temperature of 600°C-900°C to conduct a chlorination reaction. A variation of conversion rate of the reaction to silicon tetrachloride over time at each reaction temperature is shown in FIG. 2.

(Example 3)

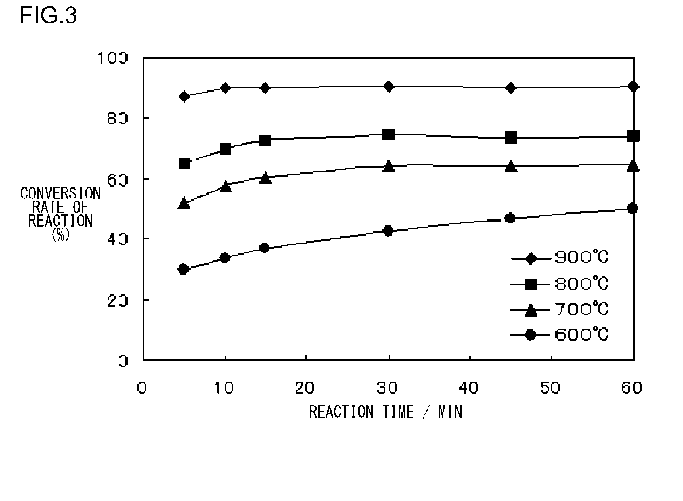

100 mg of ash of silicic acid biomass was used as a silicic acid-containing substance, and 37 mg of ash produced in a power-generation facility was used as a carbon-containing substance. An ash used in this example was an ash of residue produced by biomass saccharification on producing bioethanol, and an ash produced in a power-generation facility was an ash produced in an IGCC, both of which were used without pulverization. A silica content in the ash of silicic acid biomass was 71.8 % by mass, and an ash produced in an IGCC used had a carbon content of 79.0% by mass, a sulfur content of 5.9% by mass, a mean particle diameter of 8 $\mu$m, and a surface area (BET) of 23 $m^2$/g. A reaction mixture was prepared using a procedure similar to Example 1, and then brought into contact with a pure chlorine gas at a temperature of 600°C-900°C to conduct a chlorination reaction. A variation of conversion rate of the reaction to silicon tetrachloride over time at each reaction temperature is shown in FIG. 3.

(Comparative example 1)

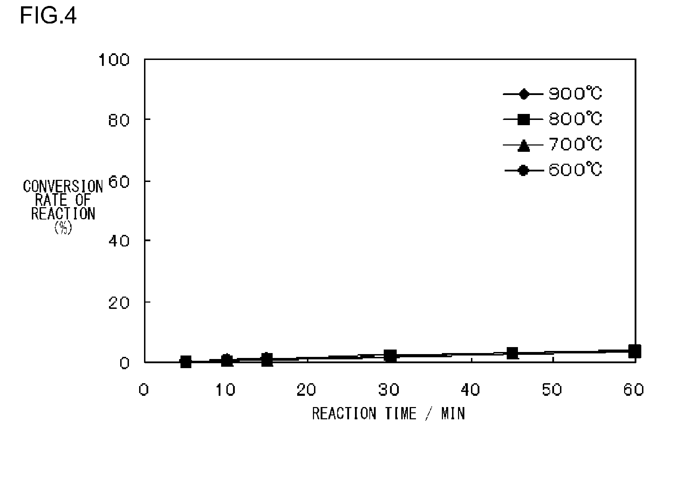

100 mg of silica stone was used as a silicic acid-containing substance, and 38 mg of coke (manufactured by Nippon Oil Corp., carbon content: 99.9% by mass or higher) was used as a carbon-containing substance. A silica stone and coke were used after pulverized by a ball mill. A silica stone after pulverization had a surface area (BET) of 2,160 $cm^2$/g and a silica content of 95.2% by mass. A reaction mixture was prepared using a procedure similar to Example 1, and then brought into contact with a pure chlorine gas at a temperature of 600°C-900°C to conduct a chlorination reaction. A variation of conversion rate of the reaction to silicon tetrachloride over time at each reaction temperature is shown in FIG. 4.

(Comparative example 2)

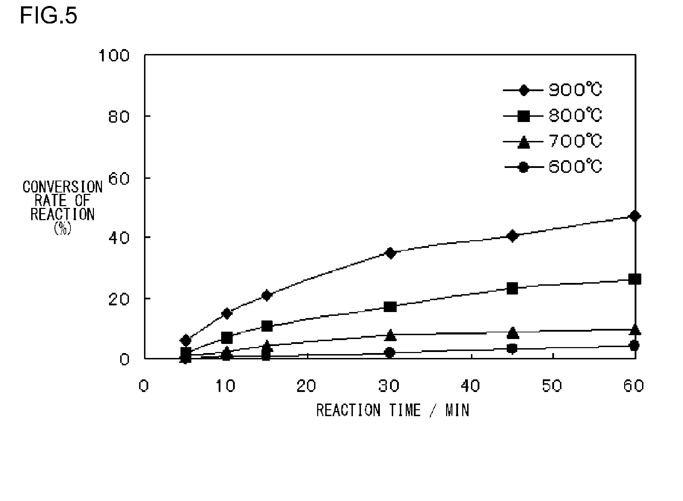

100 mg of ash of silicic acid biomass was used as a silicic acid-containing substance, and 29 mg of coke (manufactured by Nippon Oil Corp., carbon content: 99.9% by mass or higher) was used as a carbon-containing substance. An ash used in this example, which was a residue produced by biomass saccharification on producing bioethanol, was used without pulverization. Coke was used after pulverized by a ball mill. A silica content in the ash of used silicic acid biomass was 71.8% by mass. A reaction mixture was prepared using a procedure similar to Example 1, and then brought into contact with a pure chlorine gas at a temperature of 600°C-900°C to conduct a chlorination reaction. A variation of conversion rate of the reaction to silicon tetrachloride over time at each reaction temperature is shown in FIG. 5.

(Evaluation results)

As shown in FIGs. 1-5, in the methods of producing silicon tetrachloride in Examples 1-3, it was confirmed that the conversion rate of the reaction was significantly increased in each reaction temperature as compared with Comparative example 1. It is also found that the conversion rate of reaction in Example 3 was significantly increased as compared with Comparative example 2. It is considered that this is due to an effect of using an ash produced in a power-generation facility as a carbon-containing substance.

The present invention is described based on the examples, but the invention is not limited to these examples, and various changes and modifications can be made thereto.

Industrial Applicability

The present invention can be applied to a method for producing silicon tetrachloride where various inorganic silicon compounds are used as a raw material.

## Claims

1. A method for producing silicon tetrachloride, wherein a silicon-containing substance is chlorinated in the presence of a carbon-containing substance which contains an ash produced in an industrial process.

2. A method for producing silicon tetrachloride according to claim 1, wherein the ash produced in the industrial process is an ash produced in a power-generation facility where a combustion energy is converted into an electric power by burning an organic substance.

3. A method for producing silicon tetrachloride according to any one of claim 1 and 2, wherein the silicon-containing substance contains a silicic acid biomass.

4. A method for producing silicon tetrachloride according to any one of claims 1 to 3, wherein the silicon-containing substance is mixed with the carbon-containing substance, and carbonized by heating, followed by chlorination.

FIG.1

FIG.2

FIG.3

FIG.4

FIG.5

**INTERNATIONAL SEARCH REPORT**

International application No.

PCT/JP2010/005799

A. CLASSIFICATION OF SUBJECT MATTER
*C01B33/107*(2006.01)i, *B09B3/00*(2006.01)i

According to International Patent Classification (IPC) or to both national classification and IPC

B. FIELDS SEARCHED

Minimum documentation searched (classification system followed by classification symbols)
C01B33/107, B09B3/00

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 62-171912 A (Director General, Agency of Industrial Science and Technology), 28 July 1987 (28.07.1987), claims; page 3, upper left column, lines 1 to 8; example 1 (Family: none) | 1,3-4<br>2 |
| X<br>A | JP 62-252311 A (Director General, Agency of Industrial Science and Technology), 04 November 1987 (04.11.1987), claims; page 1, lower left column, lines 9 to 13; page 2; examples 1 to 3 (Family: none) | 1,3-4<br>2 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 November, 2010 (26.11.10) | 07 December, 2010 (07.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/005799 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 64-33011 A  (Director General, Agency of Industrial Science and Technology), 02 February 1989 (02.02.1989), claims; page 2; examples 1 to 3 & US 4847059 A          & EP 302604 A3 & DE 3868176 A | 1,3-4<br>2 |
| A | JP 60-25116 A  (Denki Kagaku Kogyo Kabushiki Kaisha), 11 December 1985 (11.12.1985), entire text (Family: none) | 1-4 |

Form PCT/ISA/210 (continuation of second sheet) (July 2009)

**REFERENCES CITED IN THE DESCRIPTION**

**Patent documents cited in the description**

- JP S58055330 B
- JP H03055407 B
- JP H04072765 B